# EUROPÄISCHE PATENTSCHRIFT

(11) **EP 1 847 728 B1**
(45) Veröffentlichungstag und Bekanntmachung des Hinweises auf die Patenterteilung: **31.10.2012**
(21) Anmeldenummer: 07102578.7
(22) Anmeldetag: 16.02.2007
(51) Int. Cl.: F16H 57/021, F16H 1/02

(54) **Getriebe-Antriebseinheit mit einem Lagerbolzen, sowie Verfahren zu dessen Herstellung**
Transmission-drive unit with a bolt and method for its manufacture
Unité d'entraînement d'engrenage dotée d'un boulon d'appui et son procédé de fabrication

(30) Priorität: 18.04.2006 DE 102006017930
(43) Veröffentlichungstag der Anmeldung: 24.10.2007
(73) Patentinhaber: ROBERT BOSCH GMBH, 70442 Stuttgart (DE)
(72) Erfinder: Oberle, Hans-Juergen, 76437, Rastatt (DE); Schwendemann, Franz, 77833, Ottersweier (DE)

(56) Entgegenhaltungen:
- DE-A1- 19 706 872
- DE-A1-102004 047 184
- US-A- 4 235 117
- US-A- 4 367 660

## Beschreibung

### Stand der Technik

Die Erfindung betrifft eine Getriebe-Antriebseinheit und ein Herstellungsverfahren einer solchen, insbesondere zum Verstellen von beweglichen Teilen im Kraftfahrzeug nach der Gattung der unabhängigen Ansprüche, entsprechend des Oberbegriffe der Ansprüche 1 oder 8.

Mit der gattungsbildenden DE 197 06 872 A1 ist eine Vorrichtung bekannt geworden, die beispielsweise zum Verstellen von Fensterscheiben oder Schiebedächern eingesetzt wird. Bei dieser Antriebsvorrichtung wird das Drehmoment eines Elektromotors auf die Schnecke der Ankerwelle übertragen. Die Schnecke treibt über eine Verzahnung ein Abtriebsrad an, das die Verstellung der Fensterscheibe bzw. des Schiebedachs bewirkt. Die Nabe des Abtriebsrades ist dabei auf einen frei auskragenden Lagerbolzen drehbar gelagert. Das andere Ende des Lagerbolzen ist im Boden des topfförmigen Getriebegehäuses an dessen Innenseite drehfest aufgenommen. Dazu wird der Lagerbolzen beim Spritzen des Getriebegehäuses in den Boden miteingespritzt. Zur besseren Verbindung mit dem Kunststoff des Getriebegehäuses trägt der Lagerbolzen an seinem einen Ende eine Riffelung. Das Abtriebsrad wird einerseits durch einen Anschlagbund auf der Seite des Boden des Getriebegehäuses und andererseits durch einen Klemmring, der auf den Lagerbolzen aufgeschoben wird, axial geführt. Die Herstellung einer solchen Riffelung an einem Ende des Lagebolzens, und dessen lagerichtige Zuführung beim Einspritzen in das Getriebegehäuse ist ein relativ aufwendiger und kostenintensiver Prozess.

### Offenbarung der Erfindung

### Vorteile der Erfindung

Die erfindungsgemäße Getriebe-Antriebseinheit und deren erfindungsgemäßes Herstellungsverfahren mit den Merkmalen der unabhängigen Ansprüche haben den Vorteil, dass durch das Anformen des Hinterschnitts an der Stirnfläche des Lagerbolzens, kein zusätzlicher Fertigungsschritt für das Anformen einer Nut oder einer Riffelung notwendig ist. Wird der Hinterschnitt des Lagerbolzens bei der Herstellung des Getriebegehäuses umspritzt, ist dadurch praktisch ohne zusätzliche Kosten eine zuverlässige Verliersicherung für den Lagerbolzen geschaffen. Durch das Anformen des Hinterschnitts in einem Arbeitsgang mit dem Ablängen des Lagerbolzens sind die Herstellungskosten eines solchen Lagerbolzens nicht höher, als die eines Lagerbolzens mit einer vorgefertigten glatten Oberfläche.

Durch die in den Unteransprüchen aufgeführten Maßnahmen ergeben sich vorteilhafte Weiterbildungen und Verbesserungen der in den unabhängigen Ansprüchen angegebenen Merkmalen. So kann der Hinterschnitt in vorteilhafter Weise durch einen Grat erzeugt werden, der beim Abschneiden des Lagerbolzens an einer Stirnfläche angeformt wird. Dabei wird der Grat durch Materialumformung am äußeren Umfang der Stirnfläche durch das Schnittwerkzeug ausgebildet, wobei die Abmessungen des Grats durch die Wahl und die Einstellung des Schnittwerkzeugs beeinflusst werden können.

Besonders günstig ist es, wenn am Ende des Lagerbolzens zuvor eine Phase angeformt wird, deren abgeschrägte Fläche zusammen mit dem Grat den Hinterschnitt bildet. Dabei kann über die Größe der Phase das Volumen des Hinterschnitts vorgegeben werden, das bei der Herstellung mit dem Getriebegehäuse umspritzt wird.

Für die Montage des Lagerbolzens im Getriebegehäuse ist es günstig, wenn der Grat radial nicht über den Umfang des Lagerbolzens übersteht. Dadurch kann beispielsweise auch das Getriebezahnrad an der zweiten, nichteingespritzten Stirnseite problemlos auf den Lagerbolzen aufgeschoben werden.

Durch das Anformen eines Grats beim Abschneiden der Lagerbolzens kann im Wesentlichen kostenneutral ein Hinterschnitt ausgebildet werden, der sich beispielsweise über einen Winkelbereich von 30° bis 180° erstreckt. Ein solcher Winkelbereich ist für die zuverlässige Fixierung des Lagerbolzens im Getriebegehäuse ausreichend, wobei vorteilhaft die Drehlage des Lagebolzens zum Getriebegehäuse beliebig gewählt werden kann.

Besonders günstig ist es, wenn der Lagerbolzen in axialer Richtung symmetrisch ausgebildet ist, da es dann egal ist, mit welcher Stirnseite der Lagerbolzen mit dem Getriebegehäuse umspritzt wird. Dadurch muss bei der Montage der Lagerbolzen keine Unterscheidung der beiden Enden des Lagerbolzens berücksichtigt werden, wodurch in der Montagelinie die Zuführungsvorrichtung der Lagerbolzen kostengünstiger ausgeführt werden kann.

Um eine hohe Belastbarkeit der Getriebe-Antriebseinheit zu erzielen, wird der Lagerbolzen aus Metall gefertigt, womit sich in sehr einfacher Weise ein metallener Grat an der Stirnseite ausbilden lässt. Das Getriebegehäuse wird dann vorteilhaft mittels Kunststoff-Spritzguss-Verfahren gefertigt, wobei der Lagerbolzen als Einlegeteil in das Spritzwerkzeug eingelegt wird.

Die erfindungsgemäße Ausführung des Lagerbolzens eignet sich besonders für ein Getriebegehäuse, bei dem der Lagerbolzen mit einem Ende mit einem schalenförmigen Rundkörper des Getriebegehäuses umspritzt wird, und nach der Montage des Getriebezahnrads auf dem Lagerbolzen das Getriebe mit einem Deckel verschlossen wird. Dabei wird das zweite Ende des Lagerbolzens in einer Aufnahme des Deckels gehalten. Bei einem solchen Getriebegehäuse ist der Lagerbolzen zuverlässig axial gesichert. Hierbei wird das Getriebezahnrad beispielsweise von einem Elektromotor angetrieben und das Antriebsmoment über eine weitere Getriebestufe an ein Abtriebselement übertragen.

Durch das erfindungsgemäße Herstellungsverfahren kann der zur axialen Sicherung des Lagerbolzens erforderliche Hinterschnitt in einem Prozessschritt mit dem Ablängen des Lagerbolzens angeformt werden, wodurch keine zusätzlichen Kosten entstehen.

Wird am Lagerbolzen zuerst ein Phase angeformt und erst danach der Grat an der Stirnseite ausgebildet, kann die radiale Abmessung des Grats beispielsweise mittels Schleifen auf den Nenndurchmesser des Lagerbolzens begrenzt werden.

Wird an beiden Enden des Lagerbolzens in ungefähr symmetrischer Weise ein Hinterschnitt ausgebildet, ist es egal, mit welcher Seite der Lagerbolzen in das Spritzwerkzeug eingesetzt wird. Dadurch kann die Zuführungsvorrichtung für den Lagerbolzen in der Montagelinie vereinfacht werden.

Ein Ausführungsbeispiel der Erfindung ist in den nachfolgenden Zeichnungen dargestellt und in der nachfolgenden Beschreibung näher erläutert. Es zeigen
- Figur 1: ein Schnitt durch eine erfindungsgemäße Getriebe-Antriebseinheit,
- Figur 2: eine vergrößerte Darstellung des Lagerbolzens und
- Figur 3: eine Seitenansicht des Lagerbolzens aus Figur 2 gemäß III.

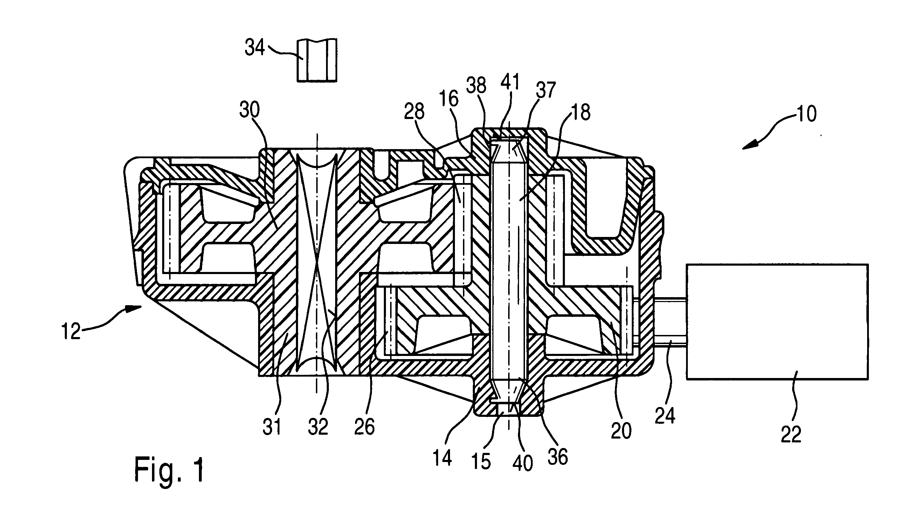

Die in Figur 1 dargestellte Getriebe-Antriebseinheit 10 weist ein Getriebegehäuse 12 auf, bei dem ein schalenförmiger Grundkörper 14 mit einem Deckel 16 verschlossen ist. Im Getriebegehäuse 12 ist ein Lagerbolzen 18 drehfest angeordnet, auf dem ein Getriebezahnrad 20 drehbar gelagert ist. Das Getriebezahnrad 20 wird hier beispielsweise von einem Elektromotor 22 angetrieben, der über eine Ankerwelle 24 ein Antriebsmoment auf das Getriebezahnrad 20 überträgt. Dazu ist auf der Ankerwelle 24 beispielsweise eine nicht näher dargestellte Schnecke angeordnet, die mit einer radialen Verzahnung 26 des Getriebezahnrads 20 kämmt. Das Getriebezahnrad 20 weist eine weitere Verzahnung 28 auf, die mit einem Abtriebselement 30 kämmt. Das Abtriebselement 30 ist direkt im Getriebegehäuse 12 gelagert und weist eine Hohlwelle 31 mit einem Innenprofil 32 auf, in das eine entsprechend profilierte Welle 34 eingreifbar ist, die ein bewegliches Teil, beispielsweise eines Kraftfahrzeugsitzes, verstellt. Der Lagerbolzen 18 ist an einem ersten Ende 36 drehfest in dem Grundkörper 14 eingespritzt und mit einem zweiten Ende 37 in einer Aufnahme 38 des Deckels 16 gelagert. Zur zuverlässigen Fixierung des Lagerbolzens 18 im Grundkörper 14 mittels Umspritzen weist der Lagerbolzen 18 zumindest an einer ersten Stirnseite 40 einen Hinterschnitt 44 auf, der mit dem Kunststoffmaterial des Getriebegehäuses 12 ausgefüllt ist. Dabei ist beispielsweise in Figur 1 die erste axiale Stirnseite 40 nicht vollständig umspritzt, so dass der Grundkörper 14 einen Durchbruch aufweist, der von der Stirnseite 40 abgeschlossen wird.

Die dargestellte Getriebe-Antriebseinheit 10 weist zwei Getriebestufen mit zwei parallelen Drehachse auf. In einer weiteren nicht dargestellten Ausführung kann entsprechend der Ausführung der DE 197 06 872 A1 das Abtriebselement ebenfalls auf dem Lagerbolzen 18 angeordnet sein, bzw. einteilig mit dem Getriebezahnrad 20 ausgebildet sein. Eine solche Ausführung weist dann beispielsweise nur eine Getriebestufe zwischen dem Getriebezahnrad 20 und dem Antriebsmotor 22 auf. Dabei kann das Getriebegehäuse 12 auch ohne Deckel 16 ausgeführt sein.

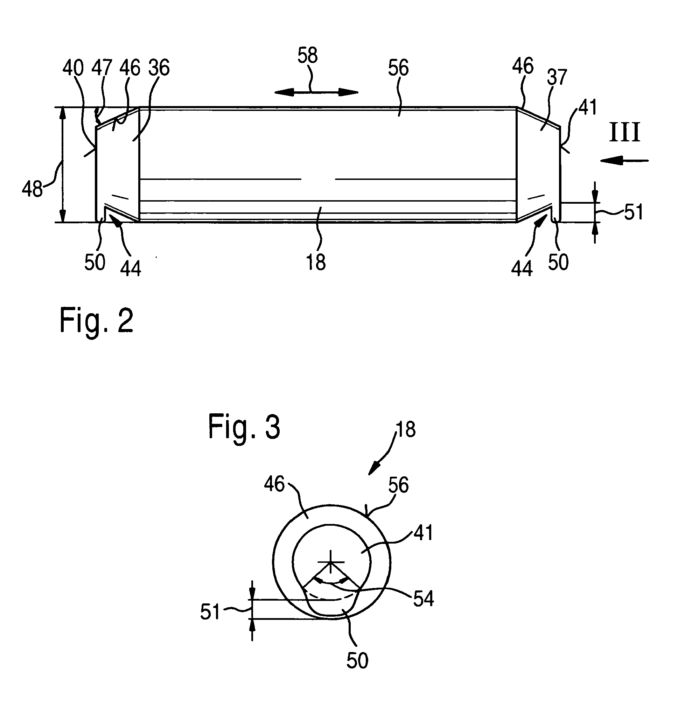

In Figur 2 ist vergrößert ein Lagerbolzen vor dessen Montage im Getriebegehäuse 12 dargestellt. Der Lagerbolzen 18 hat einen Nenndurchmesser 48, der über einen wesentlichen Teil der axialen Ausdehnung 58 des Lagerbolzens konstant ist. An den beiden Enden 36, 37 ist an den Lagerbolzen 18 jeweils eine Phase 46 mit einem Phasenwinkel 47 angeformt. Nach dem Anformen der Phasen 46 wird der Lagerbolzen 18 auf eine bestimmte Länge abgeschnitten, wodurch die beiden Stirnseiten 40, 41 gebildet werden. Gleichzeitig mit dem Ablängen des Lagerbolzens 18 werden an den beiden Stirnseiten 40, 41 jeweils ein Grat 50 angeformt, der sich radial mit einer radialen Ausdehnung 51 über die beiden Stirnseiten 40, 41 hinaus erstreckt. Dabei ist die radiale Ausdehnung 51 des Grats 50 geringer als der Nenndurchmesser 48 des Lagerbolzens 18. Steht der Grat 50 bei dessen Herstellung radial über den Nenndurchmesser 48 des Lagerbolzens 18 über, wird die radiale Ausdehnung 51 des Grats beim Überschleifen der Umfangfläche 56 des Lagerbolzens entsprechend auf den Nenndurchmesser 48 oder einen geringeren Durchmesser reduziert. Das Volumen des Hinterschnitts 44 wird durch den Phasenwinkel 47 und das Maß der radialen Ausdehnung 51 des Grats 50 bestimmt. In Figur 2 sind die beiden Enden 36, 37 bezüglich der Axialrichtung 58 näherungsweise symmetrisch ausgebildet. In einer nicht dargestellten Variation kann der Grat 50 jedoch auch nur an einer der beiden Stirnseiten 40, 41 angeformt werden, wobei dann die radiale Ausdehnung 51 auch den Nenndurchmesser 48 des Lagerbolzens 18 überragen kann.

Figur 3 zeigt eine Seitenansicht des Lagerbolzens der Figur 2, woraus ersichtlich ist, dass die radiale Ausdehnung 51 des Grats 50 den Nenndurchmesser 48 des Lagerbolzens 18 nicht überragt. Der Grat 50 erstreckt sich hierbei über einen Umfangswinkel 54 von etwa 90°, kann sich jedoch auch über einen Winkelbereich 54 von 30° bis zu 180° erstrecken.

Es sei angemerkt, dass hinsichtlich der in den Figuren gezeigten, sowie in der Beschreibung ausgeführten Ausführungsbeispiele vielfältige Kombinationsmöglichkeiten der einzelnen Merkmale untereinander möglich sind. So kann beispielsweise die Ausgestaltung des Getriebegehäuses 12, der Getriebeanordnung und des Antriebs beliebig variiert werden. Der Hinterschnitt 44 kann beispielsweise auch anstelle eines Grats 50 durch eine gezielte Materialumformung an den Stirnseiten 40, 41 angeformt werden, und kann sich dabei insbesondere auch über den gesamten Umfang erstrecken. Die erfindungsgemäße Getriebe-Antriebseinheit 10 findet bevorzugt Anwendung für das Verstellen von Kraftfahrzeugsitzen, bzw. Sitzteilen, kann jedoch auch für Getriebemotoren von Fensterhebern, oder des Schiebedachs oder für den Antrieb sonstiger beweglicher Teil eingesetzt werden.

## Patentansprüche

1. Getriebe-Antriebseinheit (10), insbesondere zum Verstellen beweglicher Teile im Kraftfahrzeug, mit einem Getriebegehäuse (12) und einem gehäusefesten Lagerbolzen (18), auf dem ein Getriebezahnrad (20) drehbar gelagert ist, wobei im Bereich mindestens einer Stirnseite (40, 41) des Lagerbolzens (18) ein Hinterschnitt (44) ausgebildet ist, **dadurch gekennzeichnet, dass** der Hinterschnitt (44) durch einen Grat (50) an der Stirnfläche (40, 41) gebildet ist.

2. Vorrichtung nach Anspruch 1, **dadurch gekennzeichnet, dass** der Hinterschnitt (44) an einer Phase (46) am Ende (36, 37) des Lagerbolzens (18) ausgeformt ist.

3. Vorrichtung nach einem der Ansprüche 1 oder 2, **dadurch gekennzeichnet, dass** die radiale Ausdehnung des Grats (50) den Nenndurchmesser (48) des Lagerbolzens (18) nicht überragt.

4. Vorrichtung nach einem der vorhergehenden Ansprüche, **dadurch gekennzeichnet, dass** sich der Hinterschnitt (44) nur über einen Teil des Umfangs (56) des Lagerbolzens (18) - insbesondere über einen Winkelbereich (54) zwischen 30° und 180° - erstreckt.

5. Vorrichtung nach einem der vorhergehenden Ansprüche, **dadurch gekennzeichnet, dass** der Hinterschnitt (44) an beiden Stirnseiten (40, 41) des Lagerbolzens (18) ausgebildet ist, und der Lagerbolzen (18) bezüglich seiner Längsrichtung (58) näherungsweise symmetrisch ausgebildet ist.

6. Vorrichtung nach einem der vorhergehenden Ansprüche, **dadurch gekennzeichnet, dass** der Lagerbolzen (18) aus Metall und das Getriebegehäuse (12) aus Kunststoff gefertigt ist, und der Hinterschnitt (44) mit dem Getriebegehäuse (12) umspritzt ist.

7. Vorrichtung nach einem der vorhergehenden Ansprüche, **dadurch gekennzeichnet, dass** das Getriebegehäuse (12) ein schalenförmigen Grundkörper (14) aufweist, in den der Lagerbolzen (18) mit einer Stirnseite (40) eingespritzt ist, und die andere Stirnseite (41) nach der Montage eines Deckels (16) des Getriebegehäuses (12) in diesem gelagert ist, und insbesondere das Getriebezahnrad (20) von einem Elektromotor (22) angetrieben wird und ein Antriebsmoment mit einer Getriebe-Untersetzung an ein Abtriebsrad (30) überträgt.

8. Verfahren zum Herstellen einer Getriebe-Antriebseinheit (10) nach einem der Ansprüche 1 bis 7, **dadurch gekennzeichnet, dass** der Grat (50) an der Stirnseite (40, 41) des Lagerbolzens (18) in einem Arbeitsgang mit dem Ablängen des Lagerbolzens (18) durch die Einstellung des Ablänge-Werkzeugs erzeugt wird.

9. Verfahren nach Anspruch 8, **dadurch gekennzeichnet, dass** am Lagerbolzen (18) zuerst eine Phase (46) angeformt wird, danach mit dem Ablängen der Grat (50) an der Stirnseite (40, 41) angeformt wird, und anschließend der Lagerbolzen (18) mit dem Grat (50) an seinem Umfang (56) überschliffen wird.

10. Verfahren nach einem der Ansprüche 8 oder 9, **dadurch gekennzeichnet, dass** der Lagerbolzen (18) als Einlegeteil einem Spritzwerkzeug für das Getriebegehäuse (12) zugeführt wird, wobei die Zuführung in das Spritzwerkzeug nach Belieben mit der ersten axialen Stirnseite (40) oder der zweiten axialen Stirnseite (41) erfolgen kann.

## Claims

1. Transmission-drive unit (10), in particular for adjusting movable parts in the motor vehicle, with a transmission housing (12) and a bearing bolt (18) which is mounted on the housing and on which a transmission gearwheel (20) is rotatably mounted, wherein an undercut (44) is formed in the region of at least one end side (40, 41) of the bearing bolt (18), **characterized in that** the undercut (44) is formed by a burr (50) on the end surface (40, 41).

2. Device according to Claim 1, **characterized in that** the undercut (44) is formed on a phase (46) at the end (36, 37) of the bearing bolt (18).

3. Device according to either of Claims 1 and 2, **characterized in that** the radial extent of the burr (50) does not protrude beyond the nominal diameter (48) of the bearing bolt (18).

4. Device according to one of the preceding claims, **characterized in that** the undercut (44) extends only over part of the circumference (56) of the bearing bolt (18) - in particular over an angular range (54) of between 30° and 180°.

5. Device according to one of the preceding claims, **characterized in that** the undercut (44) is formed on both end sides (40, 41) of the bearing bolt (18), and the bearing bolt (18) is of approximately symmetrical design with regard to the longitudinal direction (58) thereof.

6. Device according to one of the preceding claims, **characterized in that** the bearing bolt (18) is manufactured from metal and the transmission housing (12) is manufactured from plastic, and the undercut (44) is encapsulated by the transmission housing (12) by injection moulding.

7. Device according to one of the preceding claims, **characterized in that** the transmission housing (12) has a saucer-type basic body (14), into which the bearing bolt (18) is injected by one end side (40), and the other end side (41) is mounted in the transmission housing (12) after a cover (16) thereof is fitted, and in particular the transmission gearwheel (20) is driven by an electric motor (22) and transmits a driving torque with a transmission step-down to an output gear (30).

8. Method for producing a transmission-drive unit (10) according to one of Claims 1 to 7, **characterized in that** the burr (50) on the end side (40, 41) of the bearing bolt (18) is produced in one working step together with the cutting of the bearing bolt (18) to size by adjustment of the cutting-to-size tool.

9. Method according to Claim 8, **characterized in that** first of all a phase (46) is integrally formed on the bearing bolt (18), then, with the cutting to size, the burr (50) is integrally formed on the end side (40, 41), and finally the circumference (56) of the bearing bolt (18) together with the burr (50) is ground over.

10. Method according to either of Claims 8 and 9, **characterized in that** the bearing bolt (18) is fed as an insert to an injection-moulding die for the transmission housing (12), wherein the feeding into the injection-moulding die can be undertaken by the first axial end side (40) or the second axial end side (41) as required.

## Revendications

1. Unité d'entraînement d'engrenage (10), en particulier pour régler des pièces mobiles dans un véhicule automobile, comprenant un boîtier d'engrenage (12) et un boulon de palier (18) fixé au boîtier, sur lequel est montée, de manière rotative, une roue dentée d'engrenage (20), une contre-dépouille (44) étant réalisée dans la région d'au moins un côté frontal (40, 41) du boulon de palier (18), **caractérisée en ce que** la contre-dépouille (44) est formée par une bavure (50) sur la surface frontale (40, 41).

2. Dispositif selon la revendication 1, **caractérisé en ce que** la contre-dépouille (44) est façonnée au niveau d'un biseau (46) à l'extrémité (36, 37) du boulon de palier (18).

3. Dispositif selon l'une quelconque des revendications 1 ou 2, **caractérisé en ce que** l'étendue radiale de la bavure (50) ne dépasse pas le diamètre nominal (48) du boulon de palier (18).

4. Dispositif selon l'une quelconque des revendications précédentes, **caractérisé en ce que** la contre-dépouille (44) ne s'étend que sur une partie de la périphérie (56) du boulon de palier (18), en particulier sur une région angulaire (54) comprise entre 30° et 180°.

5. Dispositif selon l'une quelconque des revendications précédentes, **caractérisé en ce que** la contre-dépouille (44) est réalisée sur les deux côtés frontaux (40, 41) du boulon de palier (18), et le boulon de palier (18) est réalisé pratiquement symétriquement par rapport à sa direction longitudinale (58).

6. Dispositif selon l'une quelconque des revendications précédentes, **caractérisé en ce que** le boulon de palier (18) est fabriqué en métal et le boîtier d'engrenage (12) en plastique, et la contre-dépouille (44) est surmoulée avec le boîtier d'engrenage (12).

7. Dispositif selon l'une quelconque des revendications précédentes, **caractérisé en ce que** le boîtier d'engrenage (12) présente un corps de base (14) en forme de coque, dans lequel est injecté le boulon de palier (18) avec un côté frontal (40), et l'autre côté frontal (41) après le montage d'un couvercle (16) du boîtier d'engrenage (12), est supporté dans ledit couvercle, et en particulier la roue dentée d'engrenage (20) est entraînée par un moteur électrique (22) et transmet un couple d'entraînement avec une réduction de transmission à une roue de sortie (30).

8. Procédé pour la fabrication d'une unité d'entraînement d'engrenage (10) selon l'une quelconque des revendications 1 à 7, **caractérisé en ce que** la bavure (50) au niveau du côté frontal (40, 41) du boulon de palier (18) est produite dans une passe de travail avec la découpe à la longueur voulue du boulon de palier (18) par l'ajustement de l'outil de découpage.

9. Procédé selon la revendication 8, **caractérisé en ce qu'**un biseau (46) est d'abord façonné sur le boulon de palier (18), ensuite la bavure (50) est façonnée sur le côté frontal (40, 41) au cours de la découpe à la longueur, et finalement le boulon de palier (18) est meulé avec la bavure (50) sur sa périphérie (56).

10. Procédé selon l'une quelconque des revendications 8 ou 9, **caractérisé en ce que** le boulon de palier (18) est acheminé sous forme de pièce d'insertion à un outil de pulvérisation pour le boîtier d'engrenage (12), l'acheminement dans l'outil de pulvérisation pouvant s'effectuer de manière quelconque avec le premier côté frontal axial (40) ou avec le deuxième côté frontal axial (41).
